(19) Europäisches Patentamt
European Patent Office
Office européen des brevets

(11) EP 2 166 700 A1

(12) EUROPEAN PATENT APPLICATION
published in accordance with Art. 153(4) EPC

(43) Date of publication:
24.03.2010 Bulletin 2010/12

(51) Int Cl.:
H04L 12/24 (2006.01)

(21) Application number: 08800685.3

(22) Date of filing: 27.08.2008

(86) International application number:
PCT/CN2008/072173

(87) International publication number:
WO 2009/079942 (02.07.2009 Gazette 2009/27)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.12.2007 CN 200710125436

(71) Applicant: Huawei Technologies Co., Ltd.
Longgang District
Shenzhen
Guangdong 518129 (CN)

(72) Inventors:
• ZHANG, Weidong
Longgang District 518129
Shenzhen
(CN)
• CAO, Yandong
Longgang District 518129
Shenzhen
(CN)
• DUI, Jiying
Longgang District 518129
Shenzhen
(CN)

(74) Representative: Kreuz, Georg Maria
Huawei Technologies
Riesstrasse 25
80992 München (DE)

(54) **METHOD AND SYSTEM FOR DETECTING QOS ABNORMAL**

(57) A method for detecting QoS anomaly is provided. The method includes obtaining a QoS index of data stream transmission of a parent peer, and detecting QoS anomaly of the parent peer according to the QoS index and a corresponding QoS index threshold. A method for detecting factors causing QoS anomaly is also provided. The method includes detecting whether QoS of an associated peer is abnormal or not, counting a QoS anomaly proportion of the associated peer statistically, and determining factors causing QoS anomaly according to the anomaly proportion of the associated peer. Correspondingly, a system for detecting QoS anomaly and a system for detecting factors causing QoS anomaly are also provided. Thus, the QoS anomaly information is detected, and the factors causing the QoS anomaly are also detected, so as to ensure that the QoS anomaly information is precisely detected in a P2P system, and the QoS in the system is indeed guaranteed.

FIG. 2

**Description**

CROSS-REFERENCE TO RELATED APPLICATIONS

The application claims the benefit of priority to Chinese Patent Application No. 200710125436.3, filed with the Chinese Patent Office on December 21, 2007, and entitled "Method and System for Detecting Factors Causing QoS Anomaly", which is incorporated herein by reference in its entirety.

FIELD OF THE TECHNOLOGY

The present invention relates to the field of communication technology, and more particularly to a method and a system for detecting Quality of Service (QoS) anomaly.

BACKGROUND OF THE INVENTION

With the rapid development of science and technology, more and more media technologies have been widely used in daily life, among which the Peer to Peer (P2P) technology is a popular streaming media live broadcast technology and becomes the focus of the research and development in this industry.

In a conventional streaming media live broadcast system, streaming media data of a client is provided by a media server (MS) in real time. Although the backbone network is being upgraded continuously, the continuously increasing number of clients brings impact to the backbone network, and imposes heavier load on the MS. Therefore, the performance and QoS of the MS become the bottleneck of the system. In order to solve problems about the performance and QoS of the MS, the P2P technology becomes widely applied. The P2P technology uses peers in the network to receive and upload media data in real time, and makes full use of edge network resources through cooperation between clients. Thus, the MS does not need to provide all data, or even provides no data at all, and the clients can enjoy live programs.

The P2P streaming media live broadcast technology breaks the bottleneck of the conventional live broadcast system, but brings about new problems. In the conventional live broadcast system, all the media data are from the MS provided by an operator, which is relatively stable and is capable of providing reliable services. However, in the P2P live broadcast system, besides the MS, some media data of a client may also come from other clients. As the behaviors of clients are unpredictable and uncontrollable, the clients cannot provide reliable services.

To solve this problem, the following solution is adopted in the industry: the amount of data sent in a certain period of time is counted statistically to calculate an uplink bandwidth, that is, bandwidth = amount of data/ time, so as to obtain the capability of providing services by a peer, which serves as a basis for determining the QoS of the peer. Thus, the QoS anomaly detection is performed, and the QoS anomaly detection information is utilized to ensure the QoS.

During the implementation of the present invention, the inventors find out at least the following problems in the conventional technologies. The uplink bandwidth is calculated according to the formula (bandwidth = amount of data/time). However, as the period of time for counting the amount of data statistically is limited, and the data is not always transmitted in a stable bandwidth, the calculation result may have great errors. In addition, in the solution, the calculation is made based on counting the amount of data sent by a peer statistically, which is somewhat different from the amount of data received by a receiver actually. As a result, the bandwidth data calculated in this solution is rather unstable, and the QoS of the system cannot be really ensured.

SUMMARY OF THE INVENTION

Accordingly, the embodiments of the present invention are directed to a method and a system for detecting QoS anomaly, and a method and a system for detecting factors causing QoS anomaly, which solve the problem that QoS anomaly information in the conventional P2P system cannot be detected precisely.

To solve the above technical problems, in an embodiment, the present invention provides a method for detecting QoS anomaly, which includes the following steps.

A QoS index of data stream transmission of a parent peer is obtained.

QoS anomaly of the parent peer is detected according to the QoS index and a corresponding QoS index threshold.

A method for detecting factors causing QoS anomaly is provided, which includes the following steps.

It is detected whether QoS of an associated peer is abnormal or not.

A QoS anomaly proportion of the associated peer is counted statistically.

Factors causing the QoS anomaly are determined according to the QoS anomaly proportion of the associated peer.

In an embodiment, the present invention further provides a system for detecting QoS anomaly. The system includes a receiving unit and a parent peer QoS index calculating unit.

The receiving unit is configured to receive a data stream.

The parent peer QoS index calculating unit is configured to calculate a QoS index of a parent peer according to the received data stream, and detect QoS anomaly of the parent peer according to the QoS index of the parent peer and a corresponding QoS index threshold.

A system for detecting factors causing QoS anomaly is provided. The system includes a receiving unit, a parent peer QoS index calculating unit, an anomaly counting unit, and an anomaly factor determining unit.

The receiving unit is configured to receive a data stream.

The parent peer QoS index calculating unit is configured to calculate a QoS index of a parent peer according to the received data stream, and detect QoS anomaly of the parent peer according to the QoS index of the parent peer and a corresponding QoS index threshold.

The anomaly counting unit is configured to count a QoS anomaly proportion of an associated peer statistically.

The anomaly factor determining unit is configured to determine factors causing the QoS anomaly according to the QoS anomaly proportion of the associated peer.

Compared with the conventional technologies, the embodiments of the present invention determines whether QoS of a peer is abnormal or not according to corresponding threshold parameters when a data stream of the peer has data loss information or other problems, and precisely detect factors causing the QoS anomaly according to a QoS anomaly proportion of the peer counted statistically. Thus, QoS anomaly information of a P2P system can be detected precisely, so as to really guarantee the QoS in the system.

BRIEF DESCRIPTION OF THE DRAWINGS

FIG. 1 is a schematic structural view of a topological network of peers according to an embodiment of the present invention;

FIG. 2 is a schematic structural view of a system for detecting QoS anomaly according to an embodiment of the present invention;

FIG. 3 is a schematic view of fragments of a P2P live broadcast code stream according to an embodiment of the present invention;

FIG. 4 is a schematic view of a record of a first detection cycle T1 according to an embodiment of the present invention;

FIG. 5 is a schematic view of a record of an nth detection cycle Tn according to an embodiment of the present invention;

FIG. 6 is a schematic structural view of a system for detecting factors causing QoS anomaly according to an embodiment of the present invention;

FIG. 7 is a schematic structural view of a system for detecting factors causing QoS anomaly according to another embodiment of the present invention;

FIG. 8 is a schematic flow chart of a method for detecting QoS anomaly according to an embodiment of the present invention;

FIG. 9 is a schematic flow chart of a method for detecting QoS anomaly according to another embodiment of the present invention;

FIG. 10 is a schematic flow chart of a method for detecting factors causing QoS anomaly according to an embodiment of the present invention; and

FIG. 11 is a schematic flow chart of a method for detecting factors causing QoS anomaly according to another embodiment of the present invention.

DETAILED DESCRIPTION OF THE EMBODIMENTS

The present invention is described below in detail with reference to the accompanying drawings.

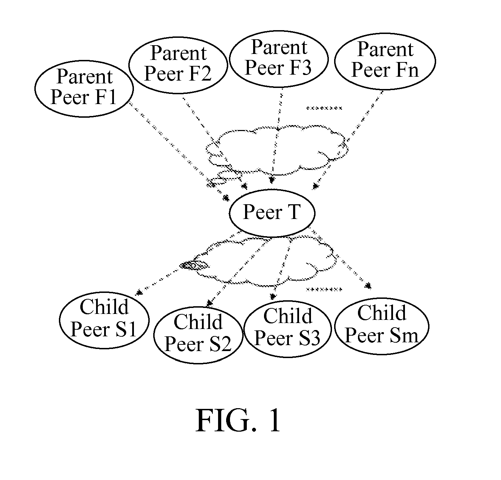

FIG. 1 is a schematic structural view of a topological network of peers according to an embodiment of the present invention. Referring to FIG. 1, in this embodiment, a P2P live broadcast system is taken as an example. In the P2P live broadcast system, the network topological structure may be configured in different models. However, the position of one peer in the topological structure may be defined as follows: a peer T receives data streams from n (n>=1) parent peers, and meanwhile provides data streams to m (m>=1) child peers.

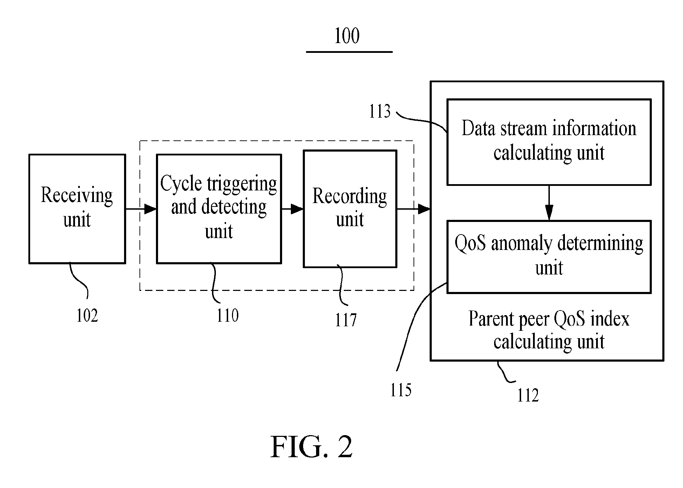

In the embodiments of the present invention, the QoS anomaly of the peer T is categorized into the following types: uplink bandwidth anomaly, downlink bandwidth anomaly, and network anomaly (for example, network congestion). The QoS anomaly of a peer refers to anomaly of the quality of a service provided by the peer. Referring to FIG. 2, a system 100 for detecting QoS anomaly according to an embodiment of the present invention includes a receiving unit 102 and a parent peer QoS index calculating unit 112.

The receiving unit 102 is configured to receive a data stream. In the embodiments of the present invention, the receiving unit 102 receives a P2P data code stream fragmented by a server, for example, an MS receives a certain amount of raw data streams (e.g., 1316B) from a live broadcast source, and assembles the data streams into data fragments.

The parent peer QoS index calculating unit 112 is configured to calculate a QoS index of a parent peer according to the received data stream, and detect QoS anomaly of the parent peer according to the QoS index of the parent peer and a corresponding QoS index threshold.

In this embodiment, the parent peer QoS index calculating unit 112 calculates a QoS index of a parent peer F, and determines whether the QoS index is abnormal or not. The parent peer QoS index calculating unit 112 further includes a data stream information calculating unit 113 and a QoS anomaly determining unit 115. The data stream information calculating unit 113 is configured to calculate a data loss rate and/or a delay in the QoS index according to the received data stream. The QoS anomaly determining unit 115 is configured to determine whether the QoS of the parent peer is abnormal or not according to the data loss rate and/or the delay, in which when the data loss rate exceeds a data loss rate threshold or when the delay of the data stream exceeds a delay threshold, it is determined that the QoS of the parent peer is abnormal.

In the embodiments of the present invention, the system 100 for detecting QoS anomaly further includes: a cycle triggering and detecting unit 110, configured to detect a time cycle and trigger a QoS detection, and a recording unit 117, configured to record a maximum fragment number of data fragments sent by the parent peer in each detection and a time stamp thereof.

In this embodiment, after a QoS detection cycle T is triggered, in a first detection, a large fragment S 1 sent by the parent peer F and a time stamp T1 of the fragment S 1 are recorded; and in a subsequent $n^{th}$ (n>=2) detection cycle, a maximum fragment Sn sent by the parent peer F and a time stamp Tn of the fragment Sn are obtained.

The data stream information calculating unit 113 calculates the data loss rate in the QoS index according to maximum fragment numbers of the data fragments recorded in two detections, and calculates the delay according to time stamps corresponding to the maximum fragment numbers of the data fragments recorded in two detections.

The QoS anomaly determining unit 115 determines whether the QoS of the parent peer is abnormal or not according to the data loss rate and/or the delay.

The following situations are considered as abnormal.

A) It is assumed that An fragments among the fragments between S(n-1) and Sn should be from the parent peer F when the data is normal, and actually, Bn fragments among the fragments between S(n-1) and Sn are from the parent peer F. It is deemed that the QoS is abnormal, if the loss rate of the data fragments from the parent peer F between S(n-1) and Sn exceeds a threshold, that is:

$$(An - Bn)/Bn > L.$$

B) When the data is normal, fragments being played for a time of (n-1) * T should be received in n cycles. It is considered that the QoS is abnormal, if the delay of the data stream exceeds a threshold, that is:

$$(n-1) * T - (Tn - T1) > D.$$

In this embodiment, the threshold parameters include the loss rate threshold L and the delay threshold D.

L is a data loss rate threshold, that is, W data fragments should be received from a certain parent peer in a period of time, whereas X data fragments are actually received by child peers, so that (W - X)/W is lost. When (W - X)/W is greater than L, the data stream is abnormal.

D is a delay threshold, that is, in a period of time R, it takes a time V to play the data fragments received by a child peer, and the delay is R - V. When R - V is greater than D, the data stream is abnormal.

The following method may be adopted to perform the detection in A).

It is assumed that An fragments among the fragments between S 1 and Sn should be from the parent peer F when the data is normal, and actually only Bn fragments among the fragments between S 1 and Sn are from the parent peer F. It is considered that the QoS is abnormal if the loss rate of the data fragments from the parent peer F among the fragments between S1 and Sn exceeds a threshold, that is:

$$(An - Bn)/Bn > L.$$

The following situations are considered as normal.

When only one determination criterion is adopted, if the QoS anomaly determining unit 115 determines that the data loss rate is not greater than the data loss rate threshold or the delay of the data stream is not greater than the delay threshold, the QoS of the parent peer is normal.

When two determination criteria are adopted, if the QoS anomaly determining unit 115 determines that the data loss rate is not greater than the data loss rate threshold and the delay of the data stream is not greater than the delay threshold, the QoS of the parent peer is normal.

A specific application example is given in the following to describe the process for determining whether QoS of a parent peer is abnormal or not.

It is set that the detection cycle T = 6000 ms, the data loss rate threshold L = 20%, and the delay threshold D = 8000 ms.

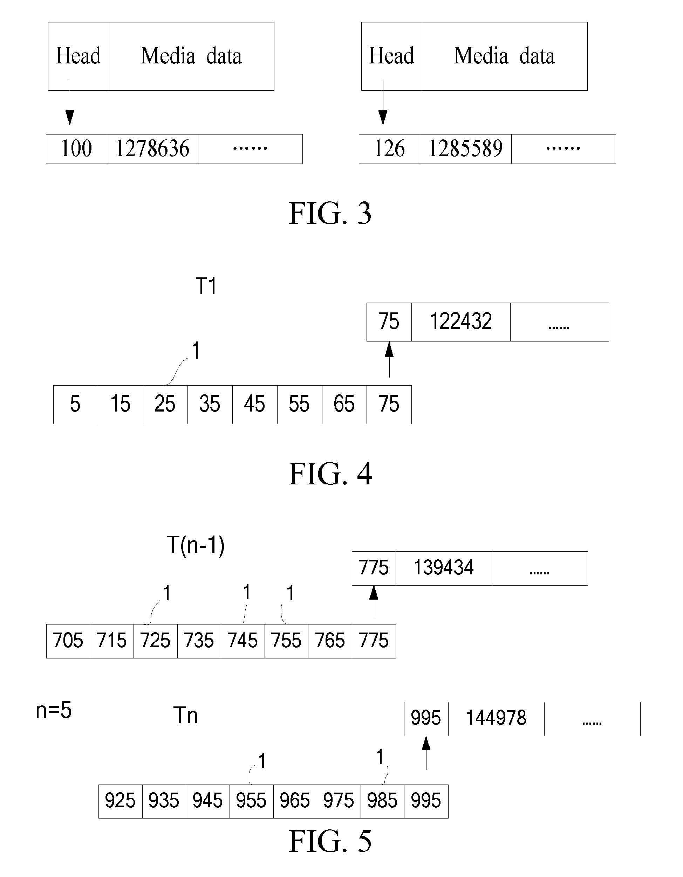

The parent peer is a server, which fragments a P2P data stream, and the structure of data fragments is as shown in FIG. 3. That is, head information is added to the data. The head information includes a fragment number (a sequence number, consistent with a playing sequence) and a time stamp (setting as a current system time of the MS). Thus, a time interval between any two fragments may be obtained. It is assumed that the network between the live broadcast source and the MS is reliable, and the interval is considered as a period of time maintained by data between the two fragments. For example, in this embodiment, a playing time from the fragment 100 to the fragment 126 is approximately 1285789 - 1278636 = 7153 ms.

It is assumed that the peer F is a parent peer of the peer T, and provides fragments with fragment numbers that can be evenly divided by 5. The data of a first detection cycle is as shown in Figures 4 and 5 (the data fragments indicated by 1 are not received yet, and the other data fragments have been received). The records of the first detection cycle include S1 = 775 and T1 = 122432, and the records of the (n = 5)th detection cycle include Sn = 995 and Tn = 144978.

1. Calculating the fragment loss rate

The number of fragments that should be received from the peer F in the (n = 5)th cycle: A5 = (995-775)/5 + 1 = 23, and the number of fragments actually received B5 = 21. The fragment loss rate = (23 - 21)/23 = 8.7% < 20%, so that the fragment loss rate is normal.

2. Calculating the delay

The time stamp of the received maximum fragment in the (n = 5)th detection cycle T5 = 144978, and the time stamp of the maximum fragment recorded in the first cycle T1 = 122432. The delay of the current cycle = (n - 1) * T - (T5 - T1) = (5 - 1) * 6000 - (144978 - 122432) = 1454 ms < 8000 ms, so that the delay is normal.

Therefore, the QoS of the parent peer F in the (n = 5)th cycle is detected to be normal.

The embodiment of the present invention can precisely determine whether the data stream transmission between the parent peer and the child peer is abnormal or not. In another aspect, the time stamp mechanism can shield the code rate fluctuation factors in the media playing, and detect the anomaly of the data stream timely by determining whether the delay is abnormal or not.

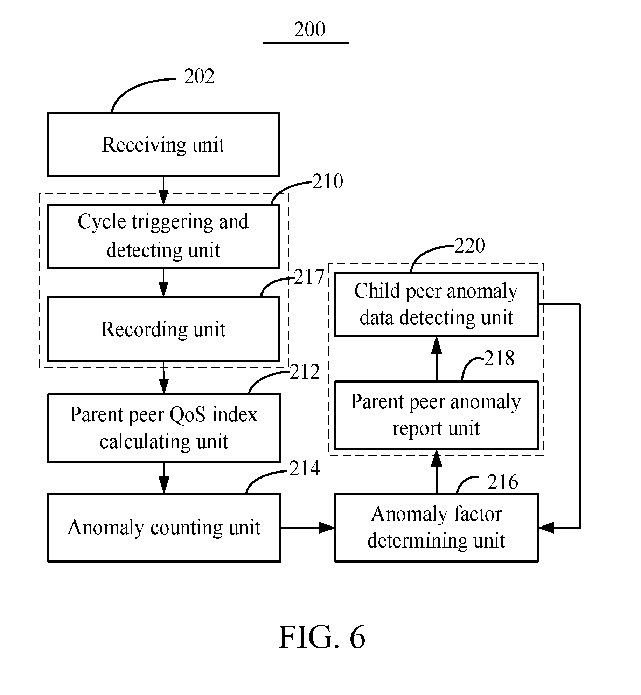

Referring to FIG. 6, a system 200 for detecting factors causing QoS anomaly according to an embodiment of the present invention includes a receiving unit 202 and a parent peer QoS index calculating unit 212.

The receiving unit 202 is configured to receive a data stream. In the embodiment of the present invention, the receiving unit 202 receives a P2P data code stream fragmented by a server, for example, an MS receives a certain amount of raw data streams (for example, 1316B) from a live broadcast source, and assembles the data streams into data fragments.

The parent peer QoS index calculating unit 212 is configured to calculate a QoS index of a parent peer according to the received data stream, and detect a QoS anomaly of the parent peer according to the QoS index of the parent peer and a corresponding QoS index threshold.

In this embodiment, the parent peer QoS index calculating unit 212 calculates a QoS index of the parent peer F, and determines whether the QoS index is abnormal or not. The parent peer QoS index calculating unit 212 includes a data stream information calculating unit 113 and a QoS anomaly determining unit 115. The data stream information calculating unit 113 is configured to calculate a data loss rate and/or a delay in the QoS index according to the received data stream. The QoS anomaly determining unit 115 is configured to determine whether the QoS of the parent peer is abnormal or not according to the data loss rate and/or the delay, in which when the data loss rate exceeds a data loss rate threshold or when the delay of the data stream exceeds a delay threshold, it is determined that the QoS of the parent peer is abnormal.

In this embodiment, the system 200 for detecting factors causing QoS anomaly may further include: a cycle triggering and detecting unit 210, configured to detect a time cycle and trigger QoS detection, and a recording unit 217, configured to record a maximum fragment number of data fragments sent by the parent peer in each detection and a time stamp thereof.

The system 200 may further include: an anomaly counting unit 214, configured to count a QoS anomaly proportion of an associated peer statistically, and an anomaly factor determining unit 216, configured to determine factors causing QoS anomaly according to the QoS anomaly proportion of the associated peer.

In this embodiment, the factors causing the QoS anomaly include downlink bandwidth anomaly of a terminal peer, uplink bandwidth anomaly of a terminal peer, and network anomaly. The downlink bandwidth anomaly of the terminal peer specifically indicates insufficient downlink capability or insufficient downlink bandwidth of the terminal peer, and the uplink bandwidth anomaly of the terminal peer specifically indicates insufficient uplink capability or insufficient uplink bandwidth of the terminal peer. The factors causing the QoS anomaly are determined as follows.

Determination of downlink capability anomaly of a child peer

A QoS cycle T is triggered. It is assumed that the peer has n parent peers in the detection cycle, and data transmission anomaly with y parent peers can be detected through a QoS detection policy of an individual parent peer. If y/n > Y, it indicates that the downlink capability of the peer is insufficient.

Threshold parameter:

Y is a downlink bandwidth threshold, that is, it is assumed that a peer has n parent peers, and data transmission anomaly with y parent peers is detected, and if y/n > Y, it indicates that the downlink bandwidth of the peer is insufficient.

When the child peer determines that the downlink capability thereof is not insufficient, the child peer sends a received data anomaly notification to the parent peers.

Determination of uplink capability anomaly of a parent peer

A QoS cycle T is triggered. It is assumed that the peer has m child peers in the detection cycle, and u child peers report data transmission anomaly at the child peers themselves in the cycle. If u/m > U, it indicates that the uplink capability of the peer is insufficient.

Threshold parameter:

U is an uplink bandwidth threshold, that is, it is assumed that a peer has m child peers, and data transmission anomaly with u child peers is detected, and if u/m > U, it indicates that the uplink bandwidth of the peer is insufficient.

Determination of network anomaly

When certain data stream anomaly is detected in the QoS detection, and the anomaly is not caused by child peer factors according to the determination of downlink capability anomaly of the child peer, the corresponding parent peer is notified, and meanwhile, if the anomaly is also not caused by parent peer factors according to the determination of uplink capability anomaly of the parent peer, the anomaly is considered as a network anomaly.

In this embodiment, the system 200 further includes a parent peer anomaly report unit 218 configured to report a notification that a detection result is QoS anomaly to corresponding parent peers. In this embodiment, the parent peers of the terminal peer that have QoS anomaly are detected, and then the QoS anomaly is reported to the corresponding parent peers.

In this embodiment, the system 200 further includes a child peer anomaly data detecting unit 220 configured to detect a number of received QoS anomalies reported by a child peer in a current cycle.

The anomaly counting unit 214 is configured to count the QoS anomaly proportion of the associated peer statistically. The anomaly counting unit 214 may count a QoS anomaly proportion of parent peers statistically according to the detection result of the system 100 for detecting QoS anomaly, or count a QoS anomaly proportion of child peers statistically according to the number of QoS anomalies reported by the child peer that is detected by the child peer anomaly data detecting unit.

The anomaly factor determining unit 216 determines factors causing the QoS anomaly according to the QoS anomaly proportion of the parent peers and the downlink bandwidth threshold, and particularly, if the QoS anomaly proportion of the parent peers exceeds the downlink bandwidth threshold, the factor causing the QoS anomaly is the downlink bandwidth anomaly of the terminal peer. The anomaly factor determining unit 216 also determines factors causing the QoS anomaly according to the QoS anomaly proportion of the child peers and the uplink bandwidth threshold, and particularly, if the QoS anomaly proportion of the child peers exceeds the uplink bandwidth threshold, the factor causing the QoS anomaly is the uplink bandwidth anomaly of the terminal peer.

In this embodiment, the anomaly factor determining unit 216 may count the QoS anomaly proportion of the parent peers statistically first, or count the QoS anomaly proportion of the child peers statistically first to determine the factors causing the QoS anomaly accordingly.

In this embodiment, if the determination result of the anomaly factor determining unit 216 is neither downlink bandwidth anomaly nor uplink bandwidth anomaly of the terminal peer, it is determined as a network anomaly.

After the type of the QoS anomaly is determined, the system can perform corresponding anomaly processing for the QoS anomaly.

The embodiments of the present invention take various factors causing the data stream anomaly in the network into account, and makes determination by counting the QoS anomalies statistically. Thus, the factors causing the QoS anomaly are detected more objectively, which may be advantageous to the optimization and adjustment of the network topological structure, and more precise than the unreliable determination in the conventional technology.

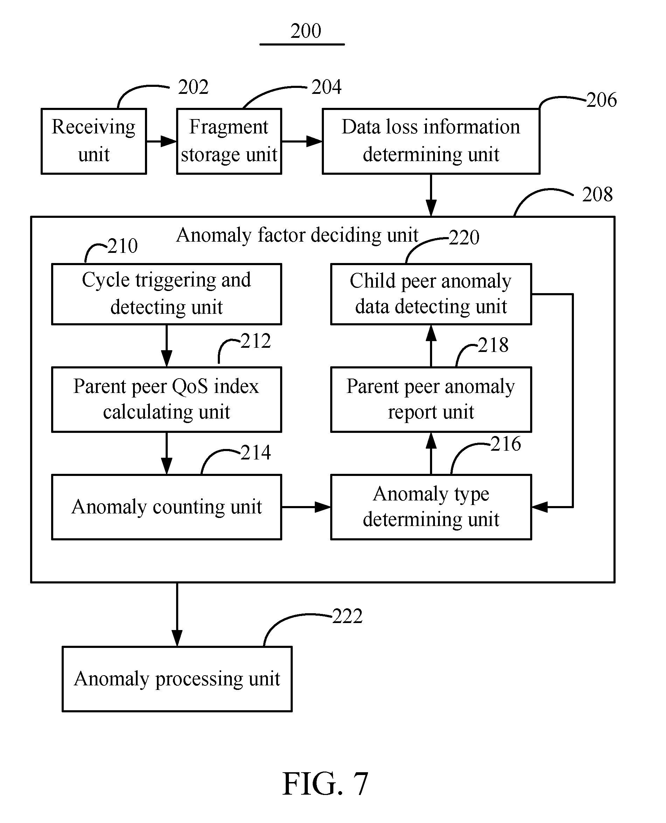

Referring to FIG. 7, a system 200 for detecting factors causing QoS anomaly according to another embodiment of the present invention includes a receiving unit 202, a fragment storage unit 204, a data loss information determining unit 206, an anomaly factor deciding unit 208, and an anomaly processing unit 222.

The receiving unit 202 is configured to receive a P2P data stream fragmented by a server. In this embodiment, a certain amount of data streams (for example, 1316B) received by an MS from a live broadcast source are taken as example.

The fragment storage unit 204 is configured to store the P2P data stream fragmented by the server. In this embodiment, the data fragment structure may be obtained with reference to the data fragments shown in FIG. 3. That is, head information is added to the data. The head information includes a fragment number (a sequence number, consistent with a playing sequence) and a time stamp (setting as a current system time of the MS). Thus, a time interval between any two fragments may be obtained. It is assumed that the network between the live broadcast source and the MS is reliable, and the interval may be considered as a period of time maintained by data between the two fragments. For example, in this embodiment, a playing time from the fragment 100 to the fragment 126 is approximately 1285789 - 1278636 = 7153 ms.

The data loss information determining unit 206 is configured to determine whether data loss information exists in the data stream of a peer or not according to the data code stream. The anomaly factor deciding unit 208 is configured to decide factors causing QoS anomaly according to threshold parameters. In this embodiment, the anomaly factor deciding unit 208 further includes a cycle triggering and detecting unit 210, a parent peer QoS index calculating unit 212, an anomaly counting unit 214, an anomaly type determining unit 216, a parent peer anomaly report unit 218, and a child peer anomaly data detecting unit 220.

The cycle triggering and detecting unit 210 is configured to detect a time cycle and trigger QoS detection. In this embodiment, after a QoS detection cycle T is triggered, in a first detection, a large fragment S1 sent by the parent peer F and a time stamp T1 of the fragment S 1 are recorded, and in a subsequent $n^{th}$ (n>=2) detection cycle, a maximum fragment Sn sent by the parent peer F and a time stamp Tn of the fragment Sn are obtained.

The parent peer QoS index calculating unit 212 is configured to calculate a QoS index of the parent peer F, and determine whether the QoS index is abnormal or not.

The anomaly counting unit 214 is configured to count the number of peers having QoS anomaly statistically. In this embodiment, the counting operation is performed based on the calculated number of parent peers having QoS anomaly.

The anomaly type determining unit 216 is configured to determine a type of the QoS anomaly. In this embodiment, the QoS anomaly may be categorized into the following types: uplink bandwidth anomaly, downlink bandwidth anomaly, and network anomaly.

Determination of downlink capability anomaly of a child peer

A QoS cycle T is triggered. It is assumed that the peer has n parent peers in the detection cycle, and data transmission anomaly with y parent peers can be detected through a QoS detection policy of an individual parent peer. If y/n > Y, it indicates that the downlink capability of the peer is insufficient.

Threshold parameter:

Y is a downlink bandwidth threshold, that is, it is assumed that a peer has n parent peers, and data transmission anomaly with y parent peers is detected, and if y/n > Y, it indicates that the downlink bandwidth of the peer is insufficient.

When the child peer determines that the downlink capability thereof is not insufficient, the child peer sends a received data anomaly notification to the parent peers.

Determination of uplink capability anomaly of a parent peer

A QoS cycle T is triggered. It is assumed that the peer has m child peers in the detection cycle, and u child peers report data transmission anomaly at the child peers themselves in the cycle. If u/m > U, it indicates that the uplink capability of the peer is insufficient.

Threshold parameter:

U is an uplink bandwidth threshold, that is, it is assumed that a peer has m child peers, and data transmission anomaly with u child peers is detected, and if u/m > U, it indicates that the uplink bandwidth of the peer is insufficient.

Determination of network anomaly

When certain data stream anomaly is detected in the QoS detection, and the anomaly is not caused by child peer factors according to the determination of downlink capability anomaly of the child peer, the corresponding parent peer is notified, and meanwhile, if the anomaly is also not caused by parent peer factors according to the determination of uplink capability anomaly of the parent peer, the anomaly is considered as a network anomaly.

The parent peer anomaly report unit 218 is configured to report QoS anomaly of a current peer. In this embodiment, the anomaly is, for example, uplink anomaly or network anomaly, instead of a downlink anomaly.

The child peer anomaly data detecting unit 220 is configured to detect a number of received QoS anomalies reported by a child peer in a current cycle. In this embodiment, the calculation of the number of QoS anomalies of the child peers is similar to that of the number of QoS anomalies of the parent peers, which will not be described again here.

In the embodiments of the present invention, a P2P data code stream fragmented by a server is received; it is determined whether data loss information exists in the data stream of a peer or not according to the data code stream; and when the data loss information exists in the data stream of the peer, the factors causing QoS anomaly are determined according to threshold parameters. Thus, the QoS anomaly information can be precisely located to domains, and the factors causing QoS anomaly can be detected precisely, so as to ensure that the QoS anomaly information is detected precisely in the P2P system and the QoS of the system is guaranteed really. The time stamp mechanism shields the code rate fluctuation factor, and detects the anomaly of the data stream timely by determining whether the delay is abnormal or not. In addition, the factors causing the anomaly of the data stream are considered comprehensively, and the QoS anomaly scenarios are determined and compared according to statistical principles, which are advantageous to the optimization and adjustment of the topological structure, and prevent inaccurate determination of the QoS anomaly.

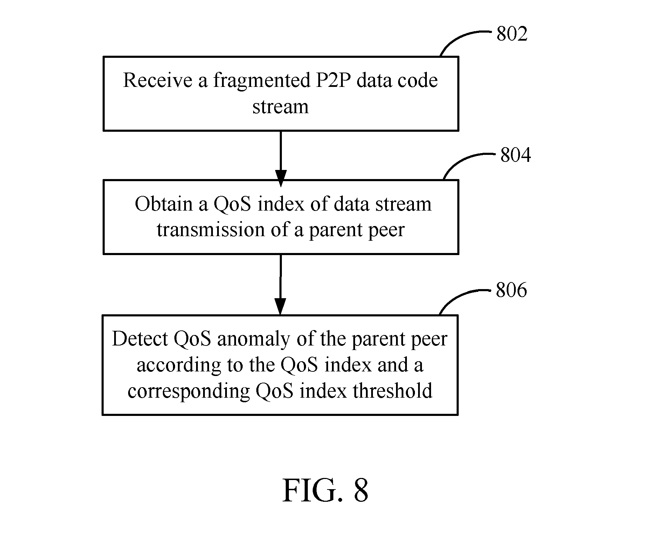

Referring to FIG. 8, in an embodiment, the present invention provides a method for detecting QoS anomaly. The method includes the following steps.

In step 802, a P2P data code stream fragmented by a server is received. In this embodiment, a certain amount of data code streams (for example, 1316B) received by an MS from a live broadcast source are taken as example. In this embodiment, the data fragment structure may be obtained with reference to the data fragments shown in FIG. 3. That is, head information is added to the data. The head information includes a fragment number (a sequence number, consistent with a playing sequence) and a time stamp (setting as a current system time of the MS). Thus, a time interval between any two fragments may be obtained. It is assumed that the network between the live broadcast source and the MS is reliable, and the interval may be considered as a period of time maintained by data between the two fragments. For example, in this embodiment, a playing time from the fragment 100 to the fragment 126 is approximately 1285789 - 1278636 = 7153 ms.

In step 804, a QoS index of data stream transmission of a parent peer is obtained. In this embodiment, the obtaining the QoS index of data stream transmission of the parent peers further includes: obtaining a data loss rate and/or delay of the data stream.

In step 806, factors causing QoS anomaly are determined according to the QoS index and a corresponding QoS index threshold. In this embodiment, the following two situations are considered as abnormal.

A) It is assumed that An fragments among the fragments between S(n-1) and Sn should be from the parent peer F when the data is normal, and actually only Bn fragments among the fragments between S(n-1) and Sn are from the parent peer F. It is considered that the QoS is abnormal, if the loss rate of the data fragments from the parent peer F between S(n-1) and Sn exceeds a threshold, that is:

$$(An - Bn)/Bn > L.$$

B) When the data is normal, fragments being played for a time of (n-1) * T should be received in n cycles. It is considered that the QoS is abnormal, if the delay of the data stream exceeds a threshold, that is:

$$(n\text{-}1) * T - (Tn - T1) > D.$$

In this embodiment, the threshold parameters include the loss rate threshold L and the delay threshold D.

L is the data loss rate threshold, that is, W data fragments should be received from a certain parent peer in a period of time, whereas X data fragments are actually received by child peers, so that (W - X)/W is lost. When (W - X)/W is greater than L, the data stream is abnormal.

D is the delay threshold, that is, in a period of time R, it takes a time V to play the data fragments received by a child peer, and the delay is R - V. When R - V is greater than D, the data stream is abnormal.

The following method may be adopted to perform the detection in A).

It is assumed that An fragments among the fragments between S 1 and Sn should be from the parent peer F when the data is normal, and actually only Bn fragments among the fragments between S1 and Sn are from the parent peer F. It is considered that the QoS is abnormal if the loss rate of the data fragments from the parent peer F between S1 and Sn exceeds a threshold, that is:

$$(An - Bn)/Bn > L.$$

In addition, it is determined whether the QoS of the parent peer is abnormal or not according to the data loss rate and/or the delay of the data stream, and if the data loss rate is greater than the data loss rate threshold, or the delay of the data stream is greater than the delay threshold, it is determined that the parent peer is abnormal.

When only one determination criterion is adopted, if the data loss rate is not greater than the data loss rate threshold or the delay of the data stream is not greater than the delay threshold, it is determined that the QoS of the parent peer is normal.

When two determination criteria are adopted, if the data loss rate is not greater than the data loss rate threshold and the delay of the data stream is not greater than the delay threshold, it is determined that the QoS of the parent peer is normal.

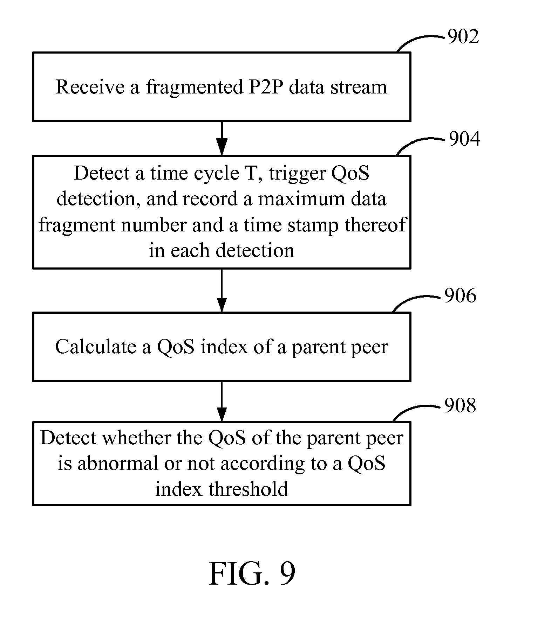

Referring to FIG. 9, in another embodiment, the present invention provides a method for detecting QoS anomaly. The method includes the following steps.

In step 902, a P2P data code stream fragmented by a server is received. In this embodiment, a certain amount of data code streams (for example, 1316B) received by an MS from a live broadcast source are taken as example. In this embodiment, the data fragment structure may be obtained with reference to the data fragments shown in FIG. 3. That is, head information is added to the data. The head information includes a fragment number (a sequence number, consistent with a playing sequence) and a time stamp (setting as a current system time of the MS). Thus, a time interval between any two fragments may be obtained. It is assumed that the network between the live broadcast source and the MS is reliable, and the interval may be considered as a period of time maintained by data between the two fragments. For example, in this embodiment, a playing time from the fragment 100 to the fragment 126 is approximately 1285789 - 1278636 = 7153 ms.

In step 904, QoS detection is triggered in a time cycle, and a maximum fragment number among data fragments sent by a parent peer and a time stamp thereof in the detection are recorded. In this embodiment, after a QoS detection cycle T is triggered, in a first detection, a large fragment S1 sent by a parent peer F and a time stamp T1 of the fragment S 1 are recorded, and in a subsequent $n^{th}$ (n>=2) detection cycle, a maximum fragment Sn sent by the parent peer F and a time stamp Tn of the fragment Sn are obtained.

In step 906, it is determined whether data loss information exists in the data stream of a peer or not according to the data code stream, and a QoS index of the parent peer F is calculated to determine whether the QoS index is abnormal or not. In this embodiment, the following two situations are considered as abnormal.

A) It is assumed that An fragments among the fragments between S(n-1) and Sn should be from the parent peer F when the data is normal, and actually only Bn fragments among the fragments between S(n-1) and Sn are from the parent peer F. It is considered that the QoS is abnormal if the loss rate of the data fragments from the parent peer F between S(n-1) and Sn exceeds a threshold, that is:

$$(An - Bn)/Bn > L.$$

B) When the data is normal, fragments being played for a time of (n-1) * T should be received in n cycles. It is considered that the QoS is abnormal if the delay of the data stream exceeds a threshold, that is:

$$(n\text{-}1) * T - (Tn - T1) > D.$$

In this embodiment, the threshold parameters include the loss rate threshold L and the delay threshold D.

L is the data loss rate threshold, that is, W data fragments should be received from a certain parent peer in a period of time, whereas X data fragments are actually received by child peers, so that (W - X)/W is lost. When (W - X)/W is greater than L, the data stream is abnormal.

D is the delay threshold, that is, in a period of time R, it takes a time V to play the data fragments received by a child peer, and the delay is R - V. When R - V is greater than D, the data stream is abnormal.

The following method may be adopted to perform the detection in A).

It is assumed that An fragments among the fragments between S1 and Sn should be from the parent peer F when the data is normal, and actually only Bn fragments among the fragments between S1 and Sn are from the parent peer F. It is considered that the QoS is abnormal if the loss rate of the data fragments from the parent peer F between S 1 and Sn exceeds a threshold, that is:

$$(An - Bn)/Bn > L.$$

A specific application example is described as follows. It is set that the detection cycle T = 6000 ms, the data loss rate threshold L = 20%, and the delay threshold D = 8000 ms.

It is assumed that the peer F is a parent peer of a peer T, and provides fragments with fragment numbers that can be evenly divided by 5. The data of a first detection cycle is as shown in FIG. 4 (the data fragment indicated by 1 is not received yet, and the other data fragments have been received). The records of the first detection cycle include S 1 = 775 and T1 = 122432, and the records of the $(n = 5)^{th}$ detection cycle include Sn = 995 and Tn = 144978.

1. Calculating the fragment loss rate

The number of fragments that should be received from the peer F in the (n = 5)th cycle: A5 = (995-775)/5 + 1 = 23, and the number of fragments actually received: B5 = 21. The fragment loss rate = (23 - 21)/23 = 8.7% < 20%, so that the fragment loss rate is normal.

2. Calculating the delay

The time stamp of the received maximum fragment in the (n = 5)th detection cycle T5 = 144978, and the time stamp of the maximum fragment recorded in the first cycle T1 = 122432. The delay of the current cycle = (n - 1) * T - (T5 - T1) = (5 - 1) * 6000 - (144978 - 122432) = 1454 ms < 8000 ms, so that the delay is normal.

Therefore, the QoS of the parent peer F in the $(n = 5)^{th}$ cycle is detected to be normal.

The embodiment of the present invention can precisely determine whether the data stream transmission between the parent peer and the child peer is abnormal or not. In another aspect, the time stamp mechanism can shield the code rate fluctuation factor in media playing, and detect the anomaly of the data stream timely by determining whether the delay is abnormal or not.

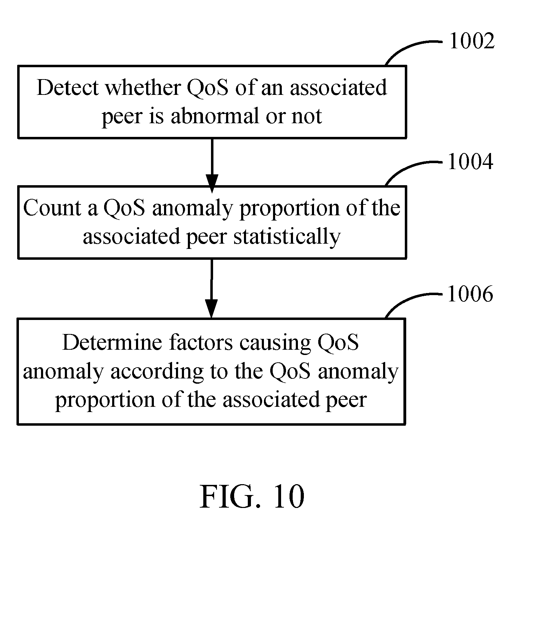

Referring to FIG. 10, in an embodiment, the present invention provides a method for detecting factors causing QoS anomaly. The method includes the following steps.

In step 1002, it is detected whether QoS of an associated peer is abnormal or not.

Here, it is detected whether QoS of a parent peer of a terminal peer is abnormal or not according to the method for detecting QoS anomaly provided in the embodiment of the present invention.

In step 1004, a QoS anomaly proportion of the associated peer is counted statistically.

The QoS anomaly proportion of parent peers is counted statistically according to a detection result about whether the QoS of the parent peer being abnormal or not. Specifically, the QoS anomaly proportion is a ratio of the number of abnormal parent peers to a total number of parent peers. The QoS anomaly proportion of child peers may also be counted statistically according to the number of child peers who report the QoS anomaly. Specifically, the QoS anomaly proportion is a ratio of the number of child peers who report the QoS anomaly to a total number of child peers.

In step 1006, factors causing QoS anomaly are determined according to the QoS anomaly proportion of the associated peer.

The process for determining the factors causing the QoS anomaly is further described as follows.

It is first determined whether the QoS anomaly proportion of parent peers exceeds a downlink bandwidth threshold or not. If yes, the factor causing the QoS anomaly is downlink bandwidth anomaly of the terminal peer; otherwise, it is further determined whether the QoS anomaly proportion of child peers exceeds an uplink bandwidth threshold or not. If yes, the factor causing the QoS anomaly is uplink bandwidth anomaly of the terminal peer. If it is determined that the factor causing the QoS anomaly is neither the downlink bandwidth anomaly nor the uplink bandwidth anomaly of the terminal peer, it is determined as a network anomaly.

In the embodiment of the present invention, alternatively, it may be determined according to the QoS anomaly proportion of child peers first, and then determined according to the QoS anomaly proportion of parent peers.

After the type of the QoS anomaly is determined, corresponding anomaly processing can be performed for the QoS anomaly.

The embodiment of the present invention considers various factors causing the data stream anomaly in the network, and makes determination by counting the QoS anomalies statistically. Thus, the factors causing the QoS anomaly are detected more objectively, which may be advantageous to the optimization and adjustment of the network topological structure, and more precise than the unreliable determination in the prior art.

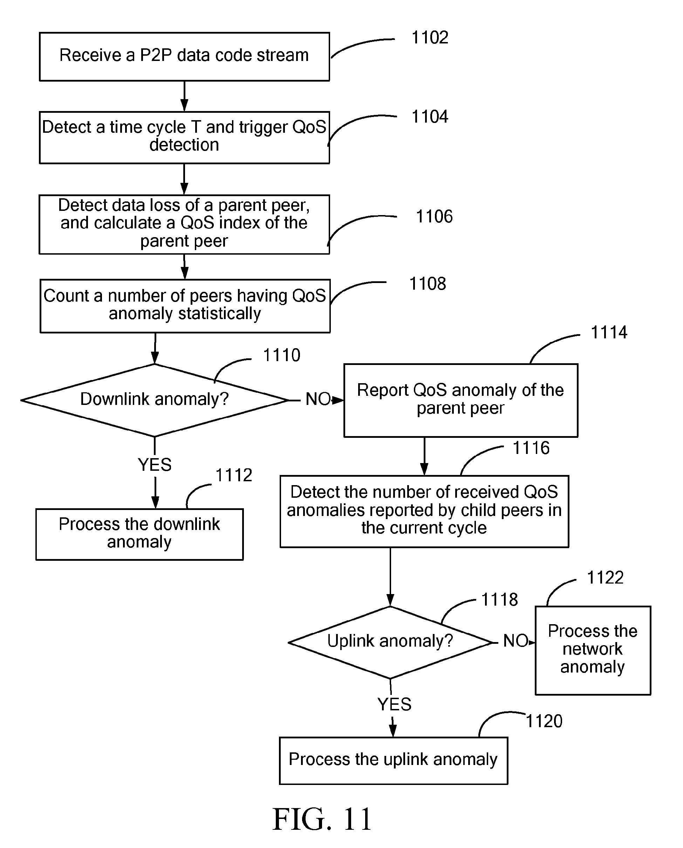

Referring to FIG. 11, in another embodiment, the present invention provides a method for detecting factors causing QoS anomaly. The method includes the following steps.

In step 1102, a P2P data code stream fragmented by a server is received. In this embodiment, a certain amount of data code streams (for example, 1316B) received by an MS from a live broadcast source are taken as example. In this embodiment, the data fragment structure may be obtained with reference to the data fragments shown in FIG. 3. That is, head information is added to the data. The head information includes a fragment number (a sequence number, consistent with a playing sequence) and a time stamp (setting as a current system time of the MS). Thus, a time interval between any two fragments may be obtained. It is assumed that the network between the live broadcast source and the MS is reliable, and the interval may be considered as a period of time maintained by data between the two fragments. For example, in this embodiment, a playing time from the fragment 100 to the fragment 126 is approximately 1285789 - 1278636 = 7153 ms.

In step 1104, a time cycle is detected and QoS detection is triggered, and a maximum fragment number among data fragments sent by a parent peer and a time stamp thereof in the detection are recorded. In this embodiment, after a QoS detection cycle T is triggered, in a first detection, a large fragment S 1 sent by a parent peer F and a time stamp T 1 of the fragment S1 are recorded, and in a subsequent $n^{th}$ (n>=2) detection cycle, a maximum fragment Sn sent by the parent peer F and a time stamp Tn of the fragment Sn are obtained.

In step 1106, it is determined whether data loss information exists in the data stream of a peer or not according to the data code stream, and a QoS index of the parent peer F is calculated to determine whether the QoS index is abnormal or not. In this embodiment, the following two situations are considered as abnormal.

A) It is assumed that An fragments among the fragments between S(n-1) and Sn should be from the parent peer F when the data is normal, and actually only Bn fragments among the fragments between S(n-1) and Sn are from the parent peer F. It is considered that the QoS is abnormal if the loss rate of the data fragments from the parent peer F between S(n-1) and Sn exceeds a threshold, that is:

$$(An - Bn)/Bn > L.$$

B) When the data is normal, fragments being played for a time of (n-1) * T should be received in n cycles. It is considered that the QoS is abnormal if the delay of the data stream exceeds a threshold, that is:

$$(n\text{-}1) * T - (Tn - T1) > D.$$

In this embodiment, the threshold parameters include the loss rate threshold L and the delay threshold D.

L is the data loss rate threshold, that is, W data fragments should be received from a certain parent peer in a period of time, whereas X data fragments are actually received by child peers, so that (W - X)/W is lost. When (W - X)/W is greater than L, the data stream is abnormal.

D is the delay threshold, that is, in a period of time R, it takes a time V to play the data fragments received by a child peer, and the delay is R - V. When R - V is greater than D, the data stream is abnormal.

The following method may be adopted to perform the detection in A).

It is assumed that An fragments among the fragments between S 1 and Sn should be from the parent peer F when the data is normal, and actually only Bn fragments among the fragments between S1 and Sn are from the parent peer F. It is considered that the QoS is abnormal if the loss rate of the data fragments from the parent peer F between S 1 and Sn exceeds a threshold, that is:

$$(An - Bn)/Bn > L.$$

In step 1108, the number of peers having QoS anomaly is counted statistically. In this embodiment, the counting operation is performed based on the calculated number of parent peers having QoS anomaly.

In step 1110, it is determined whether the type of the QoS anomaly is downlink bandwidth anomaly or not; if yes, step 1112 is performed; otherwise, step 1114 is performed. In this embodiment, the determination of downlink capability anomaly of a child peer is described as follows.

A QoS cycle T is triggered. It is assumed that the peer has n parent peers in the detection cycle, and data transmission anomaly with y parent peers can be detected through a QoS detection policy of an individual parent peer. If y/n > Y, it indicates that the downlink capability of the peer is insufficient.

Threshold parameter

Y is a downlink bandwidth threshold, that is, it is assumed that a peer has n parent peers, and data transmission anomaly with y parent peers is detected, and if y/n > Y, it indicates that the downlink bandwidth of the peer is insufficient.

When the child peer determines that the downlink capability thereof is not insufficient, the child peer sends a received data anomaly notification to the parent peers.

In step 1112, the downlink anomaly is processed, and after step 1116 is performed, the process ends.

In step 1114, QoS anomaly of a current parent peer is reported. In this embodiment, the anomaly is not a downlink anomaly, but, for example, an uplink anomaly or a network anomaly.

In step 1116, the number of received QoS anomalies reported by child peers in the current cycle is detected. In this embodiment, the calculation of the number of QoS anomalies of the child peers is similar to that of the number of QoS anomalies of the parent peers, which will not described again here.

In step 1118, it is determined whether the anomaly is uplink bandwidth anomaly or not; if yes, step 1120 is performed; otherwise, step 1122 is performed. Determination of uplink capability anomaly of a parent peer is described as follows.

A QoS cycle T is triggered. It is assumed that the peer has m child peers in the detection cycle, and u child peers report data transmission anomaly at the child peers themselves in the cycle. If u/m > U, it indicates that the uplink capability of the peer is insufficient.

Threshold parameter

U is an uplink bandwidth threshold, that is, it is assumed that a peer has m child peers, and data transmission anomaly with u child peers is detected, and if u/m > U, it indicates that the uplink bandwidth of the peer is insufficient.

Determination of network anomaly

When certain data stream anomaly is detected in the QoS detection, and the anomaly is not caused by child peer factors according to the determination of downlink capability anomaly of the child peer, the corresponding parent peer is notified, and meanwhile, if the anomaly is also not caused by parent peer factors according to the determination of uplink capability anomaly of the parent peer, the anomaly is considered as a network anomaly.

In step 1120, the uplink bandwidth anomaly is processed, and after step 1120 is performed, the process ends.

In step 1122, the network anomaly is processed, and after step 1122 is performed, the process ends.

In the embodiments of the present invention, a P2P data code stream fragmented by a server is received; it is determined whether data loss information exists in the data stream of a peer or not according to the data code stream; and when the data loss information exists in the data stream of the peer, the factors causing QoS anomaly are determined according to threshold parameters. Thus, the QoS anomaly information can be precisely located to domains, and the factors causing QoS anomaly can be detected precisely, so as to ensure that the QoS anomaly information is detected precisely in the P2P system and the QoS of the system is guaranteed really. The time stamp mechanism shields the code rate fluctuation factor, and detects the anomaly of the data stream timely by determining whether the delay is abnormal or not. In addition, the factors causing the anomaly of the data stream are considered comprehensively, and the QoS anomaly scenarios are determined and compared according to statistical principles, which are advantageous to the optimization and adjustment of the topological structure, and prevent inaccurate determination of the QoS anomaly.

Persons of ordinary skill in the art can understand that, all or a part of the processes of the methods according to the above embodiments can be implemented through a computer program instructing relevant hardware, the program may be stored in a computer readable storage medium, and when the program is run, the processes of the methods according to the above embodiments are executed. The storage medium may be a magnetic disk, an optical disk, a read-only memory (ROM), a random access memory (RAM), and the like.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1.  A method for detecting Quality of Service, QoS, anomaly, **characterized by**:

    obtaining (804) a QoS index of data stream transmission of a parent peer;
    detecting (806) QoS anomaly of the parent peer according to the QoS index and a corresponding QoS index threshold.

2.  The method according to claim 1, wherein the obtaining (804) the QoS index of data stream transmission of the parent peer comprising: obtaining a data loss rate and/or delay of the data stream.

3.  The method according to claim 2, wherein the obtaining a data loss rate and/or delay of the data stream comprises:

    triggering QoS detection in a time cycle, and recording a maximum fragment number among data fragments sent by the parent peer and a time stamp in the QoS detection; and

calculating a loss rate threshold according to the recorded fragment number among data fragments, and/or calculating the delay according to the time stamp in the QoS detection.

4.  The method according to claim 3, wherein the calculating a loss rate threshold according to the recorded fragment number among data fragments comprises:

    recording a maximum fragment number of data fragments sent by the parent peer in each detection; and
    calculating the data loss rate in the QoS index according to maximum fragment numbers of the data fragments recorded in two detections.

5.  The method according to claim 3, wherein the calculating the delay according to the time stamp in the QoS detection comprises:

    calculating the delay according to time stamps corresponding to the maximum fragment numbers of the data fragments recorded in two detections

6.  The method according to claim 2, wherein the detecting QoS anomaly of the parent peer according to the QoS index and the corresponding QoS index threshold comprises:

    determining whether the QoS of the parent peer is abnormal or not according to the data loss rate and/or the delay, in which when the data loss rate exceeds a data loss rate threshold or when the delay of the data stream exceeds a delay threshold, it is determined that the QoS of the parent peer is abnormal.

7.  A method for detecting factors causing Quality of Service, QoS, anomaly, **characterized by** comprising
    detecting whether QoS of an associated peer is abnormal or not;counting a QoS anomaly proportion of the associated peer statistically; and
    determining factors causing the QoS anomaly according to the QoS anomaly proportion of the associated peer.

8.  The method according to claim 7, wherein the factors causing QoS anomaly comprises one of the follows: uplink bandwidth anomaly, downlink bandwidth anomaly, and network anomaly.

9.  The method according to claim 8, wherein
    the counting the QoS anomaly proportion of the associated peer statistically comprises: counting the QoS anomaly of the parent peer; and

the determining factors causing the QoS anomaly comprises: determining whether the QoS anomaly proportion of parent exceeds a downlink bandwidth threshold or not, if yes, the factor causing the QoS anomaly being determined downlink bandwidth anomaly of the terminal peer.

10. The method according to claim 9, wherein the counting the QoS anomaly of the parent peer comprises: counting the QoS anomaly proportion of parent peers statistically according to a detection result about whether the QoS of the parent peer being abnormal or not, wherein the counting the QoS anomaly proportion is a ratio of the number of abnormal parent peers to a total number of parent peers.

11. The method according to claim 9, wherein if the factors causing QoS anomaly is not downlink bandwidth anomaly, the method further comprises: reporting a notification that a detection result of QoS anomaly to corresponding the parent peers.

12. The method according to any one of claims 8-11, wherein the counting the QoS anomaly proportion of the associated peer statistically comprises: counting a child peer anomaly proportion; the determining factors causing the QoS anomaly comprises: determining whether the QoS anomaly proportion of parent exceeds a downlink bandwidth threshold or not, if yes, the factor causing the QoS anomaly being determined downlink bandwidth anomaly of the terminal peer.

13. The method according to claim 12, wherein the counting the child peer anomaly proportion comprises: counting the child peer QoS anomaly proportion according to the QoS anomaly notification reported by the child peer, wherein the child peer QoS anomaly proportion is a ratio of the number of child peers who report the QoS anomaly to a total number of child peers.

14. The method according to claim 12, wherein if the anomaly is not caused by child peer factors according to the determination of downlink capability anomaly of the child peer, the corresponding parent peer is notified, and the anomaly is also not caused by parent peer factors according to the determination of uplink capability anomaly of the parent peer, the anomaly is considered as a network anomaly.

15. A system for detecting Quality of Service, QoS, anomaly, **characterized by** comprising: a receiving unit (102) and a parent peer QoS index calculating unit (112);
the receiving unit (102) is configured to receive a data stream;
the parent peer QoS index calculating unit (112) is configured to calculate a QoS index of a parent peer according to the received data stream, and detect QoS anomaly of the parent peer according to the QoS index of the parent peer and a corresponding QoS index threshold.

16. The system according to claim 15, wherein the parent peer QoS index calculating unit (112) comprises:

a data stream information calculating unit (113), configured to calculate a loss rate threshold according to the recorded fragment number among data fragments, and/or calculate the delay according to the time stamp in the QoS detection;
a QoS anomaly determining unit (115), adapted to determine whether the QoS of the parent peer is abnormal or not according to the data loss rate and/or the delay, in which when the data loss rate exceeds a data loss rate threshold or when the delay of the data stream exceeds a delay threshold, it is determined that the QoS of the parent peer is abnormal.

17. The system according to claim 15, wherein the system further comprises:

a cycle triggering and detecting unit (110), adapted to detect a time cycle and trigger a QoS detection;
a recording unit (117), configured to record a maximum fragment number of data fragments sent by the parent peer in each detection and a time stamp thereof.

18. A system for detecting factors causing QoS anomaly, **characterized by** comprising:

a receiving unit (202), configured to receive a data stream;
a parent peer QoS index calculating unit (212), configured to calculate a QoS index of a parent peer according to the received data stream, and detect QoS anomaly of the parent peer according to the QoS index of the parent peer and a corresponding QoS index threshold;
an anomaly counting unit (214), configured to count a QoS anomaly proportion of an associated peer statistically;
an anomaly factor determining unit (216), configured to determine factors causing the QoS anomaly according to the QoS anomaly proportion of the associated peer.

19. The system according to claim 18, wherein the parent peer QoS index calculating unit (212) comprises:

a data stream information calculating unit, configured to calculate a loss rate threshold according to the recorded fragment number among data fragments, and/or calculate the delay according to the time stamp in the QoS detection; a QoS anomaly determining unit, configured to determine whether the QoS of the parent peer is abnormal or not according to the data loss rate and/or the delay, in which when the data loss rate exceeds a data loss rate threshold or when the delay of the data stream exceeds a delay threshold, it is determined that the QoS of the parent peer is abnormal.

20. The system according to claim 19, wherein the system further comprises: a cycle triggering and detecting unit (210), detect a time cycle and trigger a QoS detection; a recording unit, record a maximum fragment number of data fragments sent by the parent peer in each detection and a time stamp thereof.

21. The system according to claim 18, wherein the system comprises: a parent peer anomaly report unit (218), report a notification that a detection result is QoS anomaly to corresponding parent peers.

22. The system according to any one of claims 18-21, wherein the system further comprises: a child peer anomaly report unit (220), detect a number of received QoS anomalies reported by a child peer in a current cycle.

FIG. 1

100

113

Data stream information calculating unit

Receiving unit

Cycle triggering and detecting unit

Recording unit

QoS anomaly determining unit

Parent peer QoS index calculating unit

102

110

117

115

112

FIG. 2

EP 2 166 700 A1

| Head | Media  data |
|------|-------------|

| 100 | 1278636 | ...... |
|-----|---------|--------|

| Head | Media  data |
|------|-------------|

| 126 | 1285589 | ...... |
|-----|---------|--------|

## FIG. 3

T1

| 75 | 122432 | ...... |
|----|--------|--------|

1

| 5 | 15 | 25 | 35 | 45 | 55 | 65 | 75 |
|---|----|----|----|----|----|----|----|

## FIG. 4

T(n-1)

| 775 | 139434 | ...... |
|-----|--------|--------|

1   1   1

| 705 | 715 | 725 | 735 | 745 | 755 | 765 | 775 |
|-----|-----|-----|-----|-----|-----|-----|-----|

n=5   Tn

| 995 | 144978 | ...... |
|-----|--------|--------|

1       1

| 925 | 935 | 945 | 955 | 965 | 975 | 985 | 995 |
|-----|-----|-----|-----|-----|-----|-----|-----|

## FIG. 5

200

202

Receiving unit

210

Cycle triggering and
detecting unit

217

Recording unit

212

Parent peer QoS index
calculating unit

214

Anomaly counting unit

220

Child peer anomaly
data detecting unit

218

Parent peer anomaly
report unit

216

Anomaly factor
determining unit

FIG. 6

200

Receiving unit — 202

Fragment storage unit — 204

Data loss information determining unit — 206

Anomaly factor deciding unit — 208 — 220

Cycle triggering and detecting unit — 210

Parent peer QoS index calculating unit — 212

Anomaly counting unit — 214

Child peer anomaly data detecting unit — 220

Parent peer anomaly report unit — 218

Anomaly type determining unit — 216

Anomaly processing unit — 222

FIG. 7

```
                                                        ⌐ 802
   ┌─────────────────────────────────────┐
   │  Receive a fragmented P2P data code  │
   │              stream                  │
   └─────────────────────────────────────┘
                     │
                     │                    ⌐ 804
                     ▼
   ┌─────────────────────────────────────┐
   │   Obtain a QoS index of data stream  │
   │   transmission of a parent peer      │
   └─────────────────────────────────────┘
                     │
                     │                    ⌐ 806
                     ▼
   ┌─────────────────────────────────────┐
   │  Detect QoS anomaly of the parent    │
   │  peer according to the QoS index and │
   │  a corresponding QoS index threshold │
   └─────────────────────────────────────┘
```

# FIG. 8

902

Receive a fragmented P2P data stream

904

Detect a time cycle T, trigger QoS detection, and record a maximum data fragment number and a time stamp thereof in each detection

906

Calculate a QoS index of a parent peer

908

Detect whether the QoS of the parent peer is abnormal or not according to a QoS index threshold

FIG. 9

1002

Detect whether QoS of an associated
peer is abnormal or not

1004

Count a QoS anomaly proportion of the
associated peer statistically

1006

Determine factors causing QoS
anomaly according to the QoS anomaly
proportion of the associated peer

FIG. 10

Receive a P2P data code stream — 1102

Detect a time cycle T and trigger QoS detection — 1104

Detect data loss of a parent peer, and calculate a QoS index of the parent peer — 1106

Count a number of peers having QoS anomaly statistically — 1108

Downlink anomaly? — 1110

NO → Report QoS anomaly of the parent peer — 1114

YES

Process the downlink anomaly — 1112

Detect the number of received QoS anomalies reported by child peers in the current cycle — 1116

Uplink anomaly? — 1118

NO → Process the network anomaly — 1122

YES

Process the uplink anomaly — 1120

FIG. 11

# INTERNATIONAL SEARCH REPORT

International application No.

PCT/CN2008/072173

**A. CLASSIFICATION OF SUBJECT MATTER**

H04L 12/24(2006.01)i

According to International Patent Classification (IPC) or to both national classification and IPC

**B. FIELDS SEARCHED**

Minimum documentation searched (classification system followed by classification symbols)

IPC: H04L 12/-

Documentation searched other than minimum documentation to the extent that such documents are included in the fields searched

Electronic data base consulted during the international search (name of data base and, where practicable, search terms used)

CNPAT, CNKI, EPODOC, WPI, PAJ  QOS, abnorm+, fault, detect+, node, peer, index, parent, data w flow

**C. DOCUMENTS CONSIDERED TO BE RELEVANT**

| Category* | Citation of document, with indication, where appropriate, of the relevant passages | Relevant to claim No. |
|---|---|---|
| A | CN1897547A, (HUAWEI TECH CO LTD), 17 Jan. 2007(17.01.2007), the whole document | 1-22 |
| A | CN1859237A, (HUAWEI TECH CO LTD), 08 Nov. 2006(08.11.2006), the whole document | 1-22 |
| A | KR20040073226A, (SAMSUNG ELECTRONICS CO LTD), 19 Aug. 2004(19.08.2004), the whole document | 1-22 |

☐ Further documents are listed in the continuation of Box C.          ☒ See patent family annex.

| | |
|---|---|
| * Special categories of cited documents: <br><br> "A" document defining the general state of the art which is not considered to be of particular relevance <br><br> "E" earlier application or patent but published on or after the international filing date <br><br> "L" document which may throw doubts on priority claim (S) or which is cited to establish the publication date of another citation or other special reason (as specified) <br><br> "O" document referring to an oral disclosure, use, exhibition or other means <br><br> "P" document published prior to the international filing date but later than the priority date claimed | "T" later document published after the international filing date or priority date and not in conflict with the application but cited to understand the principle or theory underlying the invention <br><br> "X" document of particular relevance; the claimed invention cannot be considered novel or cannot be considered to involve an inventive step when the document is taken alone <br><br> "Y" document of particular relevance; the claimed invention cannot be considered to involve an inventive step when the document is combined with one or more other such documents, such combination being obvious to a person skilled in the art <br><br> "&" document member of the same patent family |

| Date of the actual completion of the international search | Date of mailing of the international search report |
|---|---|
| **24 Nov. 2008(24.11.2008)** | **04 Dec. 2008 (04.12.2008)** |

| Name and mailing address of the ISA/CN <br> The State Intellectual Property Office, the P.R.China <br> 6 Xitucheng Rd., Jimen Bridge, Haidian District, Beijing, China <br> 100088 <br> Facsimile No. 86-10-62019451 | Authorized officer <br><br> BAI,Xuetao <br><br> Telephone No. (86-10)62411679 |

Form PCT/ISA/210 (second sheet) (April 2007)

## INTERNATIONAL SEARCH REPORT

| International application No. |
| --- |
| PCT/CN2008/072173 |

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

This Authority considers that there are 2 inventions covered by the claims indicated as follows:
   1. Claims 1-6, 15-17 directed to a method and system for detecting QoS abnormal.
   2. Claims 7-14, 18-22 directed to a method and system for detecting the factor resulting in the QoS abnormal.
   The groups of claims are not linked by common or corresponding special technical features and define 2 different inventions not linked by a single general inventive concept. The application, hence does not meet the requirements of unity of invention as defined in Rules 13.1 and 13.2 PCT.

1. ☐  As all required additional search fees were timely paid by the applicant, this international search report covers all searchable claims.

2. ☒  As all searchable claims could be searched without effort justifying an additional fees, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on protest**        ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet (2)) (April 2007)

## INTERNATIONAL SEARCH REPORT
Information on patent family members

International application No.

PCT/CN2008/072173

| Patent Documents referred in the Report | Publication Date | Patent Family | Publication Date |
|---|---|---|---|
| CN1897547A | 17.01.2007 | WO2007006194A1 | 18.01.2007 |
| CN1859237A | 08.11.2006 | none | |
| KR20040073226A | 19.08.2004 | none | |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•   CN 200710125436